# EUROPEAN PATENT APPLICATION

(11) **EP 4 485 659 A1**
(43) Date of publication of application: **01.01.2025**
(21) Application number: 23184035.6
(22) Date of filing: 07.07.2023
(51) Int. Cl.: H01M 50/317, H01M 50/30, H01M 50/383, A62C 3/16, A62C 35/68

(54) **BATTERY EXPLOSION-PROOF VALVE, BATTERY PLUG-IN BOX AND ELECTRIC APPARATUS**

(30) Priority: 29.06.2023 CN 202310790602
(71) Applicant: Cornex New Energy Co., Ltd., Xiaogan Hubei 432099 (CN)
(72) Inventor: SUN, Haiming, Hubei, 432099 (CN); CHEN, Cheng, Hubei, 432099 (CN); LI, Ji, Hubei, 432099 (CN); LUO, Yi, Hubei, 432099 (CN); JIANG, Yuanfu, Hubei, 432099 (CN)
(74) Representative: Maiwald GmbH

(57) **Abstract**

A battery explosion-proof valve (1), a battery plug-in box (3) and an electric apparatus are provided. The battery explosion-proof valve includes a fire-fighting medium pipeline (103), a housing (101) and a piercing assembly. The fire-fighting medium pipeline has a medium outlet (108) and a protective film (104) connected to the medium outlet to block a fire-fighting medium in the fire-fighting medium pipeline. The housing has a cavity (111), a first opening (112) and a second opening (113). The first opening and the second opening are communicated with the cavity. The fire-fighting medium pipeline is fitted in the first opening. The cavity is configured to be communicated with an inner cavity of a battery plug-in box through the second opening. The piercing assembly is arranged in the cavity and is movable relative to the fire-fighting medium pipeline to pierce the protective film.

## Description

### FIELD

The present invention relates to a field of batteries, and more particularly to a battery explosion-proof valve, a battery plug-in box and an electric apparatus.

### BACKGROUND

The battery plug-in box is usually provided with an explosion-proof valve. When the battery cell is out of thermal control, it will release a lot of gas and heat rapidly, which will make the air pressure and temperature in the battery plug-in box rise rapidly. The box will explode, if the gas and heat are not released in time, thus causing further harm. However, the explosion-proof valve can solve this problem. Further, the fire-fighting medium is injected into the battery plug-in box through the explosion-proof valve to extinguish the fire, so as to prevent the fire from spreading further.

In the related art, when the fire-fighting medium is injected into the battery plug-in box through the exploded explosion-proof valve, the flow rate of the fire-fighting medium sometimes becomes slow or the fire-fighting medium even cannot flow into the battery plug-in box, thus resulting in that the fire in the battery plug-in box cannot be extinguished in time.

Moreover, when the battery cell is out of thermal control or explodes, since a response time is required to start the fire-fighting measures, the existing battery explosion-proof valve often is unable to inject the fire-fighting medium into the battery plug-in box to extinguish the fire at once, which tends to delay the fire-fighting opportunity, cause damage to the battery and affect other batteries in the battery plug-in box, thus further expanding the loss.

### SUMMARY

The present invention seeks to solve at least one of the problems existing in the related art to at least some extent.

Therefore, embodiments of a first aspect of the present invention provide a battery explosion-proof valve, which can inject a fire-fighting medium into a battery plug-in box to extinguish the fire at once. The response time is shorter than that of the existing fire-fighting solution, and the fire-fighting opportunity will not be delayed.

The battery explosion-proof valve in the embodiments of the first aspect of the present invention includes a fire-fighting medium pipeline, a housing and a piercing assembly. The fire-fighting medium pipeline has a medium outlet and a protective film connected to the medium outlet to block a fire-fighting medium in the fire-fighting medium pipeline. The housing has a cavity, a first opening and a second opening. The first opening and the second opening are communicated with the cavity. An end of the fire-fighting medium pipeline is fitted in the first opening. The cavity is configured to be communicated with an inner cavity of a battery plug-in box through the second opening. The piercing assembly is arranged in the cavity and is movable relative to the fire-fighting medium pipeline to pierce the protective film.

In the battery explosion-proof valve of the present invention, the piercing assembly is arranged on the housing and points to the protective film of the fire-fighting medium pipeline. When explosion occurs in the battery plug-in box, the fire-fighting medium pipeline is unblocked via piercing the protective film by the piercing assembly, so that the fire-fighting medium can be injected into the battery plug-in box to extinguish the fire at once. The response time is shorter than that of the existing fire-fighting solution, the fire-fighting opportunity will not be delayed, further damage to the battery will be prevented, other batteries in the battery plug-in box will be prevented from being affected, and the loss is controlled in time.

Optionally, the piercing assembly includes a supporting plate and a piercing needle, the supporting plate and the piercing needle are connected with each other, and the supporting plate is movable relative to the fire-fighting medium pipeline to allow the piercing needle to pierce the protective film. These embodiments provide the piercing assembly. The fire-fighting medium pipeline is unblocked via piercing the protective film by the piercing needle, when the explosion occurs in the battery plug-in box.

Optionally, the supporting plate is connected with the housing, and the housing is slidably connected with the fire-fighting medium pipeline. These embodiments provide a structure that allows the piercing needle to pierce the protective film. The gas discharged from the battery plug-in box impacts the supporting plate of the housing, and the housing slides to allow the piercing needle to pierce the protective film, when the explosion occurs in the battery plug-in box.

Optionally, the housing has a first critical position and a second critical position relative to the fire-fighting medium pipeline; in the first critical position, the supporting plate abuts against the fire-fighting medium pipeline and closes the medium outlet; and in the second critical position, the supporting plate is separated from the medium outlet. These embodiments provide a structure of the housing, which can not only relieve the pressure, but also prevent the fire. When the housing is impacted by the gas discharged from the battery plug-in box to move to the first critical position, the supporting plate blocks the medium outlet after the piercing needle pierces the protective film of the fire-fighting medium pipeline. When the pressure relief of the battery plug-in box is finished, the housing can return to the second critical position, and at this time, the fire-fighting medium in the fire-fighting medium pipeline can flow into the battery plug-in box.

Optionally, the battery explosion-proof valve further includes a protective cover and an elastic member. The protective cover is installed outside the housing, the elastic member has a first end connected to an inner side of the protective cover and a second end connected to the housing, and the elastic member presses the housing towards the second critical position. These embodiments provide a structure for driving the housing to return to an initial position, for example, the housing may return to the second critical position by using an elastic force of a spring, so that the housing can return automatically.

Optionally, the battery explosion-proof valve further includes a sealing ring arranged at a bottom of the housing and around the second opening, so that the housing is hermetically fitted with the battery plug-in box.

Optionally, the sealing ring is made of an ethylene propylene diene monomer foam.

Optionally, the battery explosion-proof valve further includes a sealing sleeve fitted over the fire-fighting medium pipeline and slidably fitted in the first opening. The sealing sleeve provides a certain damping for the sliding of the housing, and ensures the sealing between the housing and the fire-fighting medium pipeline during the sliding process.

Optionally, the protective film is made of aluminum alloy.

Embodiments of a second aspect of the present invention provide a battery plug-in box. The battery plug-in box in the embodiments of the second aspect of the present invention includes a box body and the above battery explosion-proof valve according to the embodiments of the first aspect of the present invention. The box body has a first installation opening. The battery explosion-proof valve is installed at the first installation opening. The housing is located outside the box body and configured to be in contact with or separated from the box body, and the housing and the box body are configured to define a pressure relief channel therebetween when the housing and the box body are separated.

The battery plug-in box including the above battery explosion-proof valve of the present invention, on one hand, provides the pressure relief channel, and on the other hand, allows the fire-fighting medium to be injected into the battery plug-in box to extinguish the fire at once, so that the response time is shorter than that of the existing fire-fighting solution, the fire-fighting opportunity will not be delayed, further damage to the battery can be prevented, other batteries in the battery plug-in box can be prevented from being affected, and the loss can be controlled in time.

Optionally, the battery plug-in box further includes an auxiliary explosion-proof valve, the box body has a second installation opening, and the auxiliary explosion-proof valve is installed at the second installation opening, and includes: a skeleton having a cover-plate installation opening and an exhaust port, and fixedly installed at the second installation opening, the exhaust port being communicated with the second installation opening; a cover plate hermetically installed at the cover-plate installation opening, and having an exhaust channel; and a waterproof and breathable film installed in the exhaust channel, to allow a gas generated by a battery cell in a normal state to be discharged out of the box body through the waterproof and breathable film, and to allow a gas generated when the battery cell is out of thermal control to break through the waterproof and breathable film to be discharged out of the box body.

The auxiliary explosion-proof valve can balance the air pressure inside the battery plug-in box by arranging the waterproof and breathable film. When the battery explosion-proof valve explodes, the piercing needle pierces the protective film. Since the auxiliary explosion-proof valve relieves the pressure, the fire-fighting medium in the fire-fighting medium pipeline can directly flow into the battery plug-in box to extinguish the fire, thus avoiding the problem that the flow rate of the fire-fighting medium is reduced or even the fire-fighting medium cannot flow into the battery plug-in box.

Optionally, the battery plug-in box further includes a thermal reaction expansion seal arranged at a bottom end of the skeleton and configured to block the exhaust port after thermal expansion. When the battery cell is out of thermal control, the temperature rises, and the high-temperature gas will slowly heat the thermal reaction expansion seal while passing through the battery explosion-proof valve. The heated thermal reaction expansion seal will expand and block the exhaust port to prevent the fire-fighting medium from flowing out of the auxiliary explosion-proof valve.

Optionally, the first installation opening and the second installation opening are both arranged at a top of the box body. When the fire-fighting medium is injected into the battery plug-in box, even if the battery explosion-proof valve is in an open state, the fire-fighting medium will not overflow in a short time.

Optionally, the thermal reaction expansion seal is made of thermal reaction expansion foam materials.

Optionally, an explosion-proof pressure of the battery explosion-proof valve is lower than an explosion-proof pressure of the auxiliary explosion-proof valve. When the pressure in the battery plug-in box reaches the explosion-proof pressure of the battery explosion-proof valve, the battery explosion-proof valve explodes, while the auxiliary explosion-proof valve can perform a pressure relief function because of the waterproof and breathable film. When the pressure in the battery plug-in box reaches the explosion-proof pressure of the auxiliary explosion-proof valve, both the battery explosion-proof valve and the auxiliary explosion-proof valve explode.

Embodiments of a third aspect of the present invention provide an electric apparatus. The electric apparatus in the embodiments of the third aspect of the present invention includes the above battery plug-in box according to the embodiments of the second aspect of the present invention.

### BRIEF DESCRIPTION OF THE DRAWINGS

The above and/or additional aspects and advantages of the present invention will be apparent and more readily appreciated from the following descriptions made with reference to the accompanying drawings, in which:
Fig. 1 is a schematic view of an internal structure of a battery explosion-proof valve according to an embodiment of the present invention;
Fig. 2 is a schematic view of a housing in Fig. 1;
Fig. 3 is a schematic view of an external structure of a battery explosion-proof valve according to an embodiment of the present invention;
Fig. 4 is a schematic view of a battery plug-in box according to an embodiment of the present invention;
Fig. 5 is a schematic view of an internal structure of an auxiliary explosion-proof valve according to an embodiment of the present invention;
Fig. 6 is a schematic view of an auxiliary explosion-proof valve according to an embodiment of the present invention, in which a thermal reaction expansion seal expands.

### DETAILED DESCRIPTION

Reference will be made in detail to embodiments of the present invention, and examples of the embodiments are illustrated in the accompanying drawings. The embodiments described herein with reference to drawings are explanatory, illustrative, and used to generally understand the present invention. The embodiments shall not be construed to limit the present invention.

Hereinafter, a battery explosion-proof valve according to embodiments of the present invention will be described with reference to the drawings.

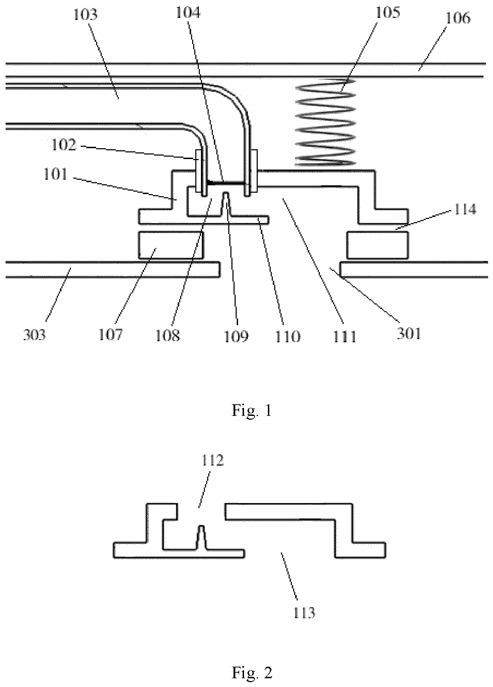

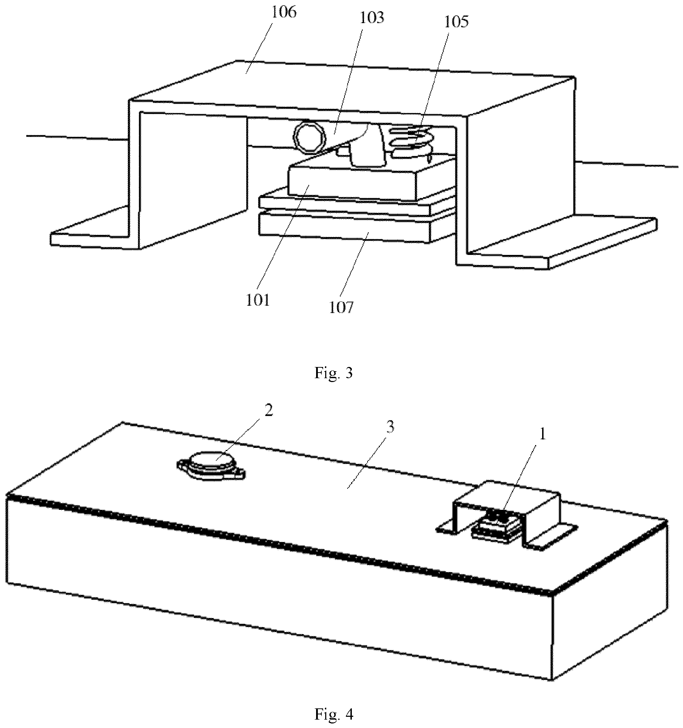

As shown in Figs. 1-3, embodiments of a first aspect of the present invention provide a battery explosion-proof valve 1, and the battery explosion-proof valve 1 includes a fire-fighting medium pipeline 103 and a housing 101. The fire-fighting medium pipeline 103 has a medium outlet 108 and a protective film 104 connected to the medium outlet 108 to block a fire-fighting medium in the fire-fighting medium pipeline 103. The housing 101 has a cavity 111, a first opening 112 and a second opening 113, and the first opening 112 and the second opening 113 are communicated with the cavity 111. An end of the fire-fighting medium pipeline 103 is fitted in the first opening 112, and the battery explosion-proof valve 1 further includes a piercing assembly arranged in the cavity 111. The piercing assembly is movable relative to the fire-fighting medium pipeline 103 so that the piercing assembly can pierce the protective film 104. The cavity 111 is suitable for being communicated with an inner cavity of the battery plug-in box 3 through the second opening 113.

In the battery explosion-proof valve 1 of the present invention, the piercing assembly is arranged on the housing 101 and points to the protective film 104 of the fire-fighting medium pipeline 103. When explosion occurs in the battery plug-in box 3, the fire-fighting medium pipeline 103 is unblocked via piercing the protective film 104 by the piercing assembly, so that the fire-fighting medium can be injected into the battery plug-in box 3 to extinguish the fire at once. The response time is shorter than that of the existing fire-fighting solution, the fire-fighting opportunity will not be delayed, further damage to the battery will be prevented, other batteries in the battery plug-in box 3 will be prevented from being affected, and the loss is controlled in time.

The battery explosion-proof valve 1 of the present invention can be used repeatedly to save costs, and have a reliable and durable structure. It is only necessary to replace the protective film 104 when it needs to be used repeatedly.

In some embodiments, the piercing assembly includes a supporting plate 110 and a piercing needle 109, which are connected with each other, and the supporting plate 110 is movable relative to the fire-fighting medium pipeline 103, so that the piercing needle 109 can pierce the protective film 104. In these embodiments, by arranging the piercing assembly, the fire-fighting medium pipeline 103 is unblocked via piercing the protective film 104 by the piercing needle 109, when the explosion occurs in the battery plug-in box 3.

In some embodiments, the supporting plate 110 is connected with the housing 101, and the housing 101 is slidably connected with the fire-fighting medium pipeline 103. These embodiments provide a structure that allows the piercing needle 109 to pierce the protective film 104. When the explosion occurs in the battery plug-in box 3, the gas discharged from the battery plug-in box 3 impacts the supporting plate 110 of the housing 101, so that the housing 101 slides to drive the piercing needle 109 to pierce the protective film 104.

In some alternative embodiments, the piercing assembly may also be slidably connected to the housing 101. When the explosion occurs in the battery plug-in box 3, the gas discharged from the battery plug-in box 3 impacts the supporting plate 110, and the piercing assembly slides vertically upwards relative to the housing 101, so that the piercing needle 109 pierces the protective film 104.

In some embodiments, the housing 101 has a first critical position and a second critical position relative to the fire-fighting medium pipeline 103. In the first critical position, the supporting plate 110 abuts against the fire-fighting medium pipeline 103 and closes the medium outlet 108, and in the second critical position, the supporting plate 110 is separated from the medium outlet 108, and the medium outlet 108 is communicated with a first installation opening 301 (to be described below). These embodiments provide a structure of the housing 101, which can not only relieve the pressure, but also prevent the fire. When the housing 101 is impacted by the gas discharged from the battery plug-in box 3 to move to the first critical position, the supporting plate 110 blocks the medium outlet 108 after the piercing needle 109 pierces the protective film 104 of the fire-fighting medium pipeline 103. When the pressure relief of the battery plug-in box 3 is finished, the housing 101 can return to the second critical position, and at this time, the fire-fighting medium in the fire-fighting medium pipeline 103 can flow into the battery plug-in box 3.

In some embodiments, the battery explosion-proof valve 1 in the embodiments of the present invention further includes a protective cover 106 and an elastic member 105, the protective cover 106 is installed outside the housing 101, one end of the elastic member 105 is connected to an inner side of the protective cover 106, and the other end of the elastic member 105 is connected to the housing 101. The elastic member 105 presses the housing 101 towards the second critical position. These embodiments provide a structure for driving the housing 101 to return to an initial position, for example, the housing 101 may return to the second critical position by using an elastic force of a spring, so that the housing 101 can return automatically.

Further, the elastic member 105 is a spring.

Further, the protective cover 106 is a semi-enclosed structure, and a shape of the protective cover 106 is like that of a Chinese character " 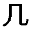 ". A part of the protective cover 106 communicated with the outside is used for the pressure relief and the outward extension of the fire-fighting medium pipeline 103.

In some embodiments, the battery explosion-proof valve 1 includes a sealing ring 107, and the sealing ring 107 is arranged at a bottom of the housing 101 and around the second opening 113, so that the housing 101 is hermetically fitted with the battery plug-in box 3. In a normal state of the battery explosion-proof valve 1, the housing 101 is pressed down by a pressure of the spring and squeezes the sealing ring 107, so that the housing 101 and the sealing ring 107 form a sealed space above the battery plug-in box 3.

Further, a thickness of the sealing ring 107 is 2-5mm, and the sealing ring 107 has a compression amount of 30%-50%.

In some embodiments, the sealing ring 107 is made of an ethylene propylene diene monomer (EPDM) foam.

In some embodiments, the sealing ring 107 may be fixedly connected to an upper end face of the battery plug-in box 3 or a lower end face of the housing 101.

In some embodiments, a lower end of the housing 101 has a circle of pressing plate along its periphery, and the pressing plate is used to press the sealing ring 107, so that the housing 101 and the battery plug-in box 3 are in a sealed state, that is, the housing 101 and the battery plug-in box 3 are hermetically connected.

Further, a periphery of the pressing plate and a periphery of the sealing ring 107 are both rectangular.

In some embodiments, the battery explosion-proof valve 1 includes a sealing sleeve 102, and the sealing sleeve 102 is fitted over the fire-fighting medium pipeline 103 and is slidably fitted in the first opening 112. The sealing sleeve 102 provides a certain damping for the sliding of the housing 101, to ensure the sealing between the housing 101 and the fire-fighting medium pipeline 103 during the sliding process.

Further, the sealing sleeve 102 is made of silica gel, and has a thickness of 2-4 mm.

Specifically, the silica gel may be self-lubricating silica gel.

In some embodiments, the fire-fighting medium pipeline 103 includes a horizontal section and a vertical section which are communicated with each other, the sealing sleeve 102 is fitted over the vertical section and is slidably fitted with the housing 101, and the medium outlet 108 is located at a bottom of the vertical section. The horizontal section is arranged close to an inner top of the protective cover 106 and extends horizontally outwards to be communicated with a fire-fighting pipeline. The fire-fighting medium pipeline 103 may be supported in the protective cover 106 through a support member, which is not shown in the drawings and is well known in the related art, and thus will not be detailed here.

In some embodiments, the protective film 104 is made of aluminum alloy.

In some embodiments, the housing 101 is made of metal, and the fire-fighting medium pipeline 103 is made of aluminum alloy.

As shown in Figs. 1, 4 and 5, the battery plug-in box 3 in the embodiments of the present invention includes a box body 303, and the box body 303 has a first installation opening 301. The above battery explosion-proof valve 1 is installed at the first installation opening 301. The housing 101 is located outside the box body 303, and the housing 101 may be in contact with or separated from the box body 303. When the housing 101 is separated from the box body 303, a pressure relief channel 114 is formed between the housing 101 and the box body 303. In the normal state, the housing 101 is hermetically covered at the first installation opening 301 of the battery plug-in box 3.

When the battery explosion-proof valve 1 is installed, the protective cover 106 is fixedly arranged at a periphery of the first installation opening 301, the fire-fighting medium pipeline 103 extends into the protective cover, the housing 101 is slidably connected to the medium outlet 108 of the fire-fighting medium pipeline 103, the elastic member 105 is arranged in the protective cover 106, one end of the elastic member 105 is connected to the inner side of the protective cover 106, the other end of the elastic member 105 is connected to the housing 101, the sealing ring 107 is arranged below the housing 101, and the elastic member 105 presses the housing 101 downwards and squeezes the sealing ring 107.

The battery plug-in box 3 including the above battery explosion-proof valve 1 in the embodiments of the present invention, on one hand, provides the pressure relief channel 114, and on the other hand, allows the fire-fighting medium to be injected into the battery plug-in box 3 to extinguish the fire at once, so that the response time is shorter than that of the existing fire-fighting solution, the fire-fighting opportunity will not be delayed, further damage to the battery can be prevented, other batteries in the battery plug-in box 3 can be prevented from being affected, and the loss can be controlled in time.

Further, the first opening 112 of the housing 101 is located at an upper end face of the housing 101, and the second opening 113 is located at the lower end face of the housing 101. Through the second opening 113, the cavity 111 of the housing 101 is communicated with the first installation opening 301 of the battery plug-in box 3. The first opening 112 and the second opening 113 are both located above the first installation opening 301, so that the fire-fighting medium can directly flow into the battery plug-in box 3.

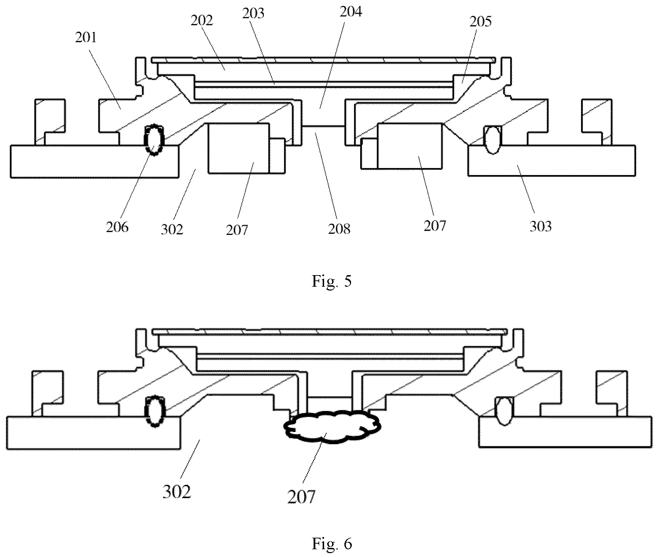

As shown in Figs. 5 and 6, the battery plug-in box 3 in the embodiments of the present invention further includes an auxiliary explosion-proof valve 2. The box body 303 has a second installation opening 302, and the auxiliary explosion-proof valve 2 is installed at the second installation opening 302. The auxiliary explosion-proof valve 2 includes a skeleton 201, a cover plate 202 and a waterproof and breathable film 203. The skeleton 201 has a cover-plate installation opening 205 and an exhaust port 208, and is fixedly installed at the second installation opening 302. The exhaust port 208 is communicated with the second installation opening 302. The cover plate 202 is hermetically installed at the cover-plate installation opening 205, and the cover plate 202 has an exhaust channel 204. The waterproof and breathable film 203 is installed in the exhaust channel 204, so that the gas generated by a battery cell in the normal state is discharged out of the box body 303 through the waterproof and breathable film 203, and the gas generated when the battery cell is out of thermal control breaks through the waterproof and breathable film 203 and is discharged out of the box body 303.

Through research, the inventor found that when the battery cell is out of thermal control, the gas will rush out of the battery cell, which will cause an air pressure in the battery plug-in box to rise sharply in a short time. At this time, the explosion-proof valve is opened, and the opened explosion-proof valve will discharge the gas. In this case, a certain pressure difference will be generated between the inside and outside of the battery plug-in box, and the discharged gas will prevent the fire-fighting medium from entering the battery plug-in box, thus reducing a flow rate of the fire-fighting medium or even making the fire-fighting medium unable to flow in.

In the present invention, by installing the battery explosion-proof valve 1 and the auxiliary explosion-proof valve 2, the battery plug-in box 3 has the functions of breathing, waterproofing and injecting the fire-fighting medium. The auxiliary explosion-proof valve 2 can balance the air pressure inside the battery plug-in box 3 by arranging the waterproof and breathable film 203. When the battery explosion-proof valve 1 explodes, the piercing needle 109 pierces the protective film 104. Since the auxiliary explosion-proof valve 2 relieves the pressure, the fire-fighting medium in the fire-fighting medium pipeline 103 can directly flow into the battery plug-in box 3 to extinguish the fire, thus avoiding the problem that the flow rate of the fire-fighting medium is reduced or even the fire-fighting medium cannot flow into the battery plug-in box 3.

Further, the skeleton 201 is fixedly installed on a top of the battery plug-in box 3 by a conventional means such as a bolt, a bottom of the skeleton 201 has an annular groove, and an annular sealing ring 206 is arranged in the annular groove, so that a sealed contact between the auxiliary explosion-proof valve 2 and the battery plug-in box 3 is realized through the annular sealing ring 206. The cover plate 202 is hermetically inserted in the skeleton 201.

In some embodiments, the cover plate 202 is made of polypropylene (PP) materials or polyamide (PA) materials by injection molding. The skeleton 201 is made of PP and LGF materials or PA and LGF materials by injection molding.

In some embodiments, the polytetrafluoroethylene (E-PTFE) microporous membrane is selected as the main waterproof and breathable material of the waterproof and breathable film. The E-PTFE membrane has a pore diameter of 0.1-10µm, while the average diameter of the air molecule is only 0.00036µm, and the average diameter of the water vapor molecule is 0.00047µm. In addition, due to a low surface energy of the E-PTFE membrane, water molecules pull each other under the action of the surface tension, and small water droplets will quickly form water beads (i.e. big water droplets) on the surface of the E-PTFE membrane, so that the gas can pass through smoothly while the liquid water cannot pass through, thus providing a great waterproof and breathable performance. When the battery cell is out of thermal control and the pressure in the battery plug-in box 3 reaches an explosion-proof pressure of the auxiliary explosion-proof valve 2, the waterproof and breathable film 203 is destroyed and a large amount of gas is discharged through it.

In some embodiments, the battery plug-in box 3 in the embodiments of the present invention further includes a thermal reaction expansion seal 207, which is arranged at a bottom end of the skeleton 201 and close to the exhaust port 208, so that when the battery cell is out of thermal control, a high-temperature gas passes through the exhaust port 208 to heat the thermal reaction expansion seal 207, so as to cause the thermal reaction expansion seal 207 to expand and block the exhaust port 208. When the battery cell is out of thermal control, the temperature rises, and the high-temperature gas will slowly heat the thermal reaction expansion seal 207 while passing through the auxiliary explosion-proof valve 2. The heated thermal reaction expansion seal 207 will expand and block the exhaust port 208 to prevent the fire-fighting medium from flowing out of the auxiliary explosion-proof valve 2, as shown in Fig. 6.

Specifically, the thermal reaction expansion seal 207 is annular and arranged around the exhaust port 208, the bottom end of the skeleton 201 is provided with a connecting structure for fixing the thermal reaction expansion seal 207, and the fixing manner may be a snapping manner or a manner of fixing through a fixing piece, which is not detailed here.

It should be noted that the timing for the thermal reaction expansion seal 207 to seal the exhaust port 208 may be designed according to actual needs. For example, when the height of the fire-fighting medium in the battery plug-in box 3 exceeds half of the height of the battery plug-in box 3 or other heights, the thermal reaction expansion seal 207 blocks the exhaust port 208. Or, when the fire-fighting medium has flown into the battery plug-in box 3 for 1 minute or other time periods, the thermal reaction expansion seal 207 blocks the exhaust port 208.

In some embodiments, the first installation opening 301 and the second installation opening 302 are both arranged at a top of the box body 303. When the fire-fighting medium is injected into the battery plug-in box 3, even if the battery explosion-proof valve 1 is in an open state, the fire-fighting medium will not overflow in a short time.

In some embodiments, the thermal reaction expansion seal 207 is made of thermal reaction expansion foam materials. The volume of the material expands slowly after being subject to a high temperature, so as to fill gaps, which has the effects of sealing and stopping water.

In some embodiments, an explosion-proof pressure of the battery explosion-proof valve 1 is less than that of the auxiliary explosion-proof valve 2.

When in use, the fire-fighting medium pipeline 103 of the battery explosion-proof valve 1 is communicated with an external fire-fighting pipeline to introduce the fire-fighting medium. In the normal state, the battery cell will generate gas normally, and the generated gas will be discharged through the waterproof and breathable film 203 of the auxiliary explosion-proof valve 2. When the battery cell is out of thermal control, and when the pressure in the battery plug-in box 3 reaches the explosion-proof pressure of the battery explosion-proof valve 1, the battery explosion-proof valve 1 explodes, that is, the housing 101 is impacted by the gas discharged upwards from the battery plug-in box 3, so that the housing 101 moves upwards along the sealing sleeve 102, and the piercing needle 109 pierces the protective film 104 of the fire-fighting medium pipeline 103. Due to the continuous impact of the gas, the supporting plate 110 closes the medium outlet 108 for a period of time, and the fire-fighting medium will not flow downwards or only a minute amount of the fire-fighting medium flows downwards. At the same time, since the auxiliary explosion-proof valve 2 has the waterproof and breathable film 203, a small amount of gas will be discharged through the waterproof and breathable film 203, which can provide a certain pressure relief function, while the pressure is mainly relieved through the battery explosion-proof valve 1. With the continuous discharge of the gas, the pressure difference between the inside and outside of the battery plug-in box 3 gradually decreases, the housing 101 moves downwards by the thrust of the spring, the piercing needle 109 and the supporting plate 110 are separated from the medium outlet 108, and the fire-fighting medium flows downwards and flows into the battery plug-in box 3 to extinguish the fire.

When the pressure in the battery plug-in box 3 reaches the explosion-proof pressure of the auxiliary explosion-proof valve 2, both the battery explosion-proof valve 1 and the auxiliary explosion-proof valve 2 explode. The housing 101 is impacted to move by the gas discharged upwards from the battery plug-in box 3, and the piercing needle 109 pierces the protective film 104 of the fire-fighting medium pipeline 103. At the same time, the auxiliary explosion-proof valve 2 performs the pressure relief function (that is, the waterproof and breathable film 203 is destroyed), and the housing 101 moves downwards rapidly through the thrust of the spring and the impact of the fire-fighting medium, and the piercing needle 109 and the supporting plate 110 are separated from the medium outlet 108, so that the fire-fighting medium quickly flows into the battery plug-in box 3 to extinguish the fire. At the same time, the thermal reaction expansion seal 207 of the auxiliary explosion-proof valve 2 gradually expands due to the high temperature. When the height of the fire-fighting medium in the battery plug-in box 3 exceeds half of the height of the battery plug-in box 3, the thermal reaction expansion seal 207 blocks the exhaust port 208 to prevent the fire-fighting medium from flowing out of the auxiliary explosion-proof valve 2.

An electric apparatus according to the embodiments of the present invention includes the above battery plug-in box 3.

In the specification, terms indicating an orientation or positional relationship, such as "central", "longitudinal", "lateral", "length", "width", "thickness", "up", "down", "front", "rear", "right", "left", "vertical", "horizontal", "top", "bottom", "inner", "outer", "clockwise", "counterclockwise", "axial", "radial" and "circumferential" as well as derivative thereof, should be construed as referring to the orientation or positional relationship as shown in the drawings under discussion. These relative terms are for convenience of description and do not intend to indicate or imply that the device or element referred to must have a specific orientation, and be constructed and operated in a specific orientation, and therefore should not be construed as limiting the present invention.

In addition, terms such as "first" and "second" are used herein for purposes of description and are not intended to indicate or imply relative importance or significance or the number of indicated technical features. Therefore, the feature defined as "first" or "second" may explicitly or implicitly include at least one this feature. In the description of the present invention, "a plurality of" means at least two, such as two, three, etc., unless specifically limited otherwise.

In the present invention, unless specified or limited otherwise, the terms "mount", "couple", "connect" and "fix" should be broadly understood, for example, they may refer to the fixed connection, the detachable connection or the integration; they may refer to the mechanical connection, the electrical connection or the mutual communication; they may refer to the direct connection or the indirect connection through the intermediate medium, and they may refer to the internal communication of two elements or the interaction between two elements, unless specified otherwise. For those ordinary skilled in the art, the specific meanings of the above terms in the present invention may be understood according to specific situations.

In the present invention, unless specified or limited otherwise, a structure in which a first feature is "on" or "below" a second feature may include an embodiment in which the first feature directly contacts the second feature, and may also include an embodiment in which the first feature indirectly contacts the second feature through an intermediate medium. Furthermore, a first feature "on", "above", or "on top of' a second feature may include an embodiment in which the first feature is right "on", "above", or "on top of" the second feature, and may also include an embodiment in which the first feature is obliquely "on", "above", or "on top of" the second feature, or just means that the first feature is at a height higher than that of the second feature. A first feature "beneath", "below", or "on bottom of" a second feature may include an embodiment in which the first feature is right "beneath", "below", or "on bottom of" the second feature, and may also include an embodiment in which the first feature is obliquely "beneath", "below", or "on bottom of" the second feature, or just means that the first feature is at a height lower than that of the second feature.

In the present invention, the term "some embodiments" means that the specific features, structures, materials or characteristics described in connection with this embodiment or example are included in at least one embodiment or example of the present invention. In this specification, the schematic expressions of the above terms are not necessarily aimed at the same embodiment or example. Moreover, the specific features, structures, materials or characteristics described may be combined in any one or more embodiments or examples in a suitable manner. In addition, those skilled in the art can combine and group different embodiments or examples and features of different embodiments or examples described in this specification without mutual contradiction.

## Claims

1. A battery explosion-proof valve (1) for a battery plug-in box (3), comprising:
a fire-fighting medium pipeline (103) having a medium outlet (108) and a protective film (104) connected to the medium outlet (108) to block a fire-fighting medium in the fire-fighting medium pipeline (103); and
a housing (101) comprising a cavity (111), a first opening (112), and a second opening (113), the first opening (112) and the second opening (113) being communicated with the cavity (111), an end of the fire-fighting medium pipeline (103) being fitted in the first opening (112), and the cavity (111) being configured to be communicated with an inner cavity (111) of the battery plug-in box (3) through the second opening (113); and
a piercing assembly arranged in the cavity (111) and movable relative to the fire-fighting medium pipeline (103) to pierce the protective film (104).

2. The battery explosion-proof valve (1) according to claim 1, wherein the piercing assembly comprises a supporting plate (110) and a piercing needle (109), the supporting plate (110) and the piercing needle (109) are connected with each other, the supporting plate (110) is movable relative to the fire-fighting medium pipeline (103) to allow the piercing needle (109) to pierce the protective film (104).

3. The battery explosion-proof valve (1) according to claim 2, wherein the supporting plate (110) is connected with the housing (101), and the housing (101) is slidably connected with the fire-fighting medium pipeline (103).

4. The battery explosion-proof valve (1) according to any one of claims 1 to 3, wherein the housing (101) has a first critical position and a second critical position relative to the fire-fighting medium pipeline (103),
in the first critical position, the supporting plate (110) abuts against the fire-fighting medium pipeline (103) and closes the medium outlet (108), and
in the second critical position, the supporting plate (110) is separated from the medium outlet (108).

5. The battery explosion-proof valve (1) according to claim 4, further comprising a protective cover (106) and an elastic member (105), wherein the protective cover (106) is installed outside the housing (101), the elastic member (105) has a first end connected to an inner side of the protective cover (106) and a second end connected to the housing (101), and the elastic member (105) presses the housing (101) towards the second critical position.

6. The battery explosion-proof valve (1) according to any one of claims 1 to 5, further comprising a sealing ring (107) arranged at a bottom of the housing (101) and around the second opening (113).

7. The battery explosion-proof valve (1) according to claim 6, wherein the sealing ring (107) is made of an ethylene propylene diene monomer foam.

8. The battery explosion-proof valve (1) according to any one of claims 1 to 7, further comprising a sealing sleeve (102) fitted over the fire-fighting medium pipeline (103) and slidably fitted in the first opening (112).

9. The battery explosion-proof valve (1) according to any one of claims 1 to 8, wherein the protective film (104) is made of aluminum alloy.

10. A battery plug-in box (3), comprising:
a box body (303) having a first installation opening (301); and
a battery explosion-proof valve (1) according to any one of claims 1 to 9 installed at the first installation opening (301), the housing (101) is located outside the box body (303) and configured to be in contact with or separated from the box body (303), and the housing (101) and the box body (303) are configured to define a pressure relief channel (114) therebetween when the housing (101) and the box body (303) are separated.

11. The battery plug-in box (3) according to claim 10, further comprising an auxiliary explosion-proof valve (2), wherein the box body (303) has a second installation opening (302), and the auxiliary explosion-proof valve (2) is installed at the second installation opening (302), and comprises:
a skeleton (201) having a cover-plate installation opening (205) and an exhaust port (208), and fixedly installed at the second installation opening (302), the exhaust port (208) being communicated with the second installation opening (302);
a cover plate (202) hermetically installed at the cover-plate installation opening (205), and having an exhaust channel (204); and
a waterproof and breathable film (203) installed in the exhaust channel (204), to allow a gas generated by a battery cell in a normal state to be discharged out of the box body (303) through the waterproof and breathable film (203), and to allow a gas generated when the battery cell is out of thermal control to break through the waterproof and breathable film (203) to be discharged out of the box body (303).

12. The battery plug-in box (3) according to claim 11, further comprising a thermal reaction expansion seal (207) arranged at a bottom end of the skeleton (201) and configured to block the exhaust port (208) after thermal expansion.

13. The battery plug-in box (3) according to claim 11 or 12, wherein the first installation opening (301) and the second installation opening (302) are both arranged at a top of the box body (303).

14. The battery plug-in box (3) according to claim 12, wherein the thermal reaction expansion seal (207) is made of thermal reaction expansion foam materials.

15. The battery plug-in box (3) according to any one of claims 11 to 14, wherein an explosion-proof pressure of the battery explosion-proof valve (1) is lower than an explosion-proof pressure of the auxiliary explosion-proof valve (2).

16. An electric apparatus, comprising a battery plug-in box (3) according to any one of claims 10 to 15.
